# EUROPÄISCHE PATENTSCHRIFT

(11) **EP 3 393 709 B1**
(45) Veröffentlichungstag und Bekanntmachung des Hinweises auf die Patenterteilung: **15.09.2021**
(21) Anmeldenummer: 16826312.7
(22) Anmeldetag: 20.12.2016
(51) Int. Cl.: B23Q 11/08, B23Q 17/22, B23Q 1/00

(54) **BEARBEITUNGSVORRICHTUNG**
MACHINING DEVICE
DISPOSITIF D'USINAGE

(30) Priorität: 21.12.2015 DE 102015226299
(43) Veröffentlichungstag der Anmeldung: 31.10.2018
(73) Patentinhaber: Homag Bohrsysteme GmbH, 33442 Herzebrock-Clarholz (DE)
(72) Erfinder: RÖTTGEN, Boris, 33449 Langenberg (DE)
(74) Vertreter: Hoffmann Eitle
(86) Internationale Anmeldenummer: PCT/EP2016/081943
(87) Internationale Veröffentlichungsnummer: WO 2017/108804

(56) Entgegenhaltungen:
- DE-A1-102012 217 762
- DE-U1-202009 010 490
- JP-A- 2008 289 988

## Beschreibung

### Technisches Gebiet

Die vorliegende Erfindung betrifft eine Bearbeitungsmaschine zum Bearbeiten von Werkstücken. Bei diesen Werkstücken kann es sich rein beispielhaft um Werkstücke aus Holz, Holzwerkstoffen, Kunststoff oder ähnlichem handeln.

### Stand der Technik

Im Bereich der Bearbeitungsmaschinen für die Möbel- und Bauelementeindustrie sind CNC-Maschinen bekannt, die nach verschiedenen Sicherheitskonzepten arbeiten. Konventionelle Lösungen betreffen dabei Trittmatten, Lichtschranken sowie Schutzgitter. Generell geht dabei der Trend in Richtung solcher Sicherheitskonzepte, die es einem Bediener gestatten, einer bewegbaren Bearbeitungseinheit relativ nahe zu kommen und hierbei Tätigkeiten durchzuführen, während die Bearbeitungseinheit in einem anderen Bereich der Bearbeitungsmaschine eine Werkstückbearbeitung durchführt.

Die DE 20 2009 007 035 U1 offenbart dabei eine Bearbeitungsmaschine mit mindestens einer verfahrbaren Bearbeitungseinheit, die einen ersten Sensor aufweist, der eingerichtet ist, in einen im Bereich der verfahrbaren Bearbeitungseinheit definierten Sicherheitsbereich eindringende Gegenstände und Personen zu erfassen. Dabei ist die Bearbeitungseinheit zwischen zwei dynamischen Bereichen verfahrbar und die Werkstücke können jeweils in einem dieser beiden dynamischen Bereiche mittels der verfahrbaren Bearbeitungseinheit bearbeitet werden, während in dem zweiten dynamischen Bereich ein Be- und Entladen von Werkstückenerfolgt. Ferner ist an der Bearbeitungsmaschine ein zweiter Sensor vorgesehen, der eingerichtet ist, in dem zweiten dynamischen Bereich anwesende Gegenstände und Personen zu erfassen, bevor die Bearbeitungseinheit in den zweiten dynamischen Bereich verfahren wird.

Ein weiteres bekanntes Sicherheitskonzept wird in der EP 1 918 629 A1 genannt, die eine Bearbeitungsmaschine zeigt, aufweisend eine Mehrzahl von Maschineneinheiten einschließlich mindestens einer Bearbeitungseinheit und mindestens einer Werkstückspanneinheit, mindestens einem Kontaktsensor und mindestens einem kontaktlos arbeitenden Sensor. Die Bearbeitungsmaschine arbeitet auf Grund eines Signals des kontaktlos arbeitenden Sensors mit einer verminderten Bewegungsgeschwindigkeit weiter und wird komplett gestoppt, wenn der mindestens eine Kontaktsensor, der an der mindestens einen Maschineneinheit angeordnet ist, einen Kontakt mit einer Person oder einem anderen Gegenstand detektiert.

Ferner ist die DE 10 2012 217 762 A1 bekannt, die eine Bearbeitungsmaschine mit einem Maschinenbett sowie einer entlang des Maschinenbetts verfahrbar angeordneten Bearbeitungseinheit zeigt. An der Bearbeitungseinheit ist ein Kontaktsensor vorgesehen, sowie ferner ein kontaktlos arbeitender Sensor, wobei der kontaktlos arbeitende Sensor am Kontaktsensor angebracht ist. Diese bekannte Bearbeitungsmaschine bildet die Basis für den Oberbegriff des beiliegenden Anspruchs 1.

### Gegenstand der Erfindung

Ein Ziel der vorliegenden Erfindung ist es, eine Bearbeitungsmaschine mit einem neuen Bedien- und/oder Sicherheitskonzept bereitzustellen, wobei Tätigkeiten eines Bedieners bei ggf. arbeitender Maschine in einfacher und sicherer Weise ermöglicht werden.

Der Gegenstand des Anspruchs 1 stellt eine entsprechende Bearbeitungsmaschine bereit, die insbesondere für eine Pendelbearbeitung vorgesehen ist. Weitere bevorzugte Ausführungsformen sind in den abhängigen Ansprüchen aufgeführt, wobei Einzelmerkmale der anhängigen Ansprüche mit anderen Merkmalen, bspw. des unabhängigen Anspruchs 1, kombiniert werden können.

Kerngedanke der vorliegenden Erfindung ist es, an einer bewegbaren Bearbeitungseinheit einer Bearbeitungsmaschine ein Bedienelement vorzusehen, mit dem ein Bedienbefehl für die Bearbeitungseinheit eingegeben werden kann. Neben diesen Merkmalen sind weitere Einzelmerkmale im unabhängigen Anspruch 1 aufgeführt, die den Kerngedanken jedoch lediglich ergänzen.

Mit der erfindungsgemäßen Vorrichtung wird eine komfortable Bedienmöglichkeit bei gleichzeitiger Bereitstellung eines Sicherheitskonzepts gewährleistet. Durch die intuitive Bedienmöglichkeit reduzieren sich Einarbeitungszeiten für Bediener.

Gemäß Anspruch 1 wird eine Bearbeitungsmaschine bereitgestellt, die folgende Merkmale umfasst: ein Maschinenbett und eine entlang des Maschinenbetts bewegbare Bearbeitungseinheit, in deren Gehäuse ein Bearbeitungsaggregat vorgesehen ist, zumindest einen am Gehäuse der Bearbeitungseinheit angebrachten Sensor, der zur Überwachung einer Verfahrbewegung der Bearbeitungseinheit vorgesehen ist, wobei am Gehäuse der bewegbaren Bearbeitungseinheit ein erstes Bedienelement vorgesehen sind, um einen Bedienbefehl, insbesondere einen Start- oder Stoppbefehl, für die Bearbeitungseinheit einzugeben.

Der genannte Sensor kann ein Kontaktsensor oder ein kontaktlos arbeitender Sensor sein, mit dem eine Person oder ein Gegenstand erkannt werden kann, der mit der Bearbeitungseinheit in Kontakt kommt oder in einen Sicherheitsbereich um die Bearbeitungseinheit gelangt. Auf diese Weise wird die Verfahrbewegung der Bearbeitungseinheit überwacht.

Bevorzugt ist am Maschinenbett ein Träger vorgesehen ist, an dem ein Betätigungselement angebracht ist, um einen Bedienbefehl für die Bearbeitungseinheit einzugeben. Durch Bereitstellen des Betätigungselements am Maschinenbett kann der Bedienkomfort in bestimmten Situationen erhöht werden, insbesondere wenn sich ein Bediener bereits in unmittelbarer Nähe zum Maschinenbett befindet.

Eine Ausführungsform ist derart ausgebildet, dass am Maschinenbett zwei Träger mit jeweils einem Betätigungselement angebracht sind, zwischen welchen Trägern ein oder mehrere Werkstückhalteeinrichtungen vorgesehen sind. Somit sind die Betätigungselemente an äußeren Positionen relativ zum Maschinenbett angeordnet, wodurch diese zugänglich sind, wenn sich die Bearbeitungseinheit am jeweils anderen Ende des Maschinenbetts befindet.

Eine solche Anordnung ist insbesondere dann vorteilhaft, wenn die Maschine im Pendelbetrieb arbeitet, bei dem in einem Bereich ein Werkstück entnommen oder aufgelegt wird, und in einem anderen Bereich eine Bearbeitung eines anderen Werkstücks stattfindet.

In einer Ausführungsform ist es vorgesehen, dass das Bedienelement ein Bedienknopf oder ein berührungssensitives Element ist. Somit kann der Bediener taktil erfassen, dass eine korrekte Betätigung durchgeführt wurde.

Ferner ist es bevorzugt, dass der Sensor ein Kontaktsensor, insbesondere ein Bumper, ist, der an einer Querseite des Gehäuses der Bearbeitungseinheit vorgesehen ist. Somit wird eine Berührung des Gehäuses der Bearbeitungseinheit sicher detektiert. Dennoch ist es möglich, dass sich ein Bediener in relativer Nähe der Bearbeitungseinheit aufhält.

In einer weiteren Ausführungsform ist an der Bearbeitungseinheit, insbesondere an einem unteren Abschnitt hiervon, ein weiterer kontaktlos arbeitender Sensor angebracht, insbesondere ein kapazitiver Sensor, ein Lasersensor, ein Infrarotsensor, ein Ultraschallsensor, ein Lasertriangulationssensor oder ein Radarsensor. Auf diese Weise kann ein Sicherheitsbereich um die Bearbeitungseinheit definiert werden.

Bevorzugt weist die Bearbeitungsmaschine eine Steuereinrichtung auf, die eingerichtet ist, basierend auf einem Bedienbefehl eine Bewegung der Bearbeitungseinheit temporär anzuhalten, und bei nochmaliger Bedienung des Bedienelements die Bewegung der Bearbeitungseinheit fortzusetzen. Der Bedienbefehl kann dabei entweder durch das Bedienelement oder das weitere Bedienelement ausgelöst werden. Somit ist eine Interaktion des Bedieners mit der Bearbeitungseinheit möglich.

Eine weitere Ausführungsform sieht vor, dass die Bearbeitungsmaschine eine Steuereinrichtung aufweist, die eingerichtet ist, eine Bewegung der Bearbeitungseinheit basierend auf einem Erfassungssignal des Sensors und/oder des weiteren kontaktlos arbeitenden Sensors (anzuhalten, und eine Bewegung der Bearbeitungseinheit basierend auf einem Bedienbefehl des Bedienelements zu starten. Auf diese Weise wird eine vorteilhafte Kombination aus einem Sicherheitskonzept und einer komfortablen Bedienung bereitgestellt.

Ferner kann es vorgesehen sein, dass das Bedienelement an einer vom Maschinenbett weg weisenden Seite des Gehäuses angebracht ist. Bevorzugt wird dabei eine Anordnung in einem oberen Bereich des Gehäuses. Somit ist das Bedienelement leicht zugänglich und gut sichtbar.

Am Gehäuse der bewegbaren Bearbeitungseinheit sind mehrere Bedienelemente vorgesehen, insbesondere mehrere Bedienknöpfe oder berührungssensitive Elemente. Dabei können den mehreren Bedienelementen unterschiedliche Funktionen zugewiesen werden, die ggf. durch entsprechende Anordnung der Bedienelemente intuitiv erkennbar sind.

Erfindungsgemäss ist jedem Bedienelement ein anderer Bedienbefehl zugewiesen, wobei bevorzugt eines der Bedienelemente einen Bedienbefehl für das Bearbeitungsaggregat (beispielsweise Befehl für eine Bewegung des Bearbeitungsaggregats oder eines Werkzeugs hiervon in vertikaler Richtung) und bevorzugt ein anderes Bedienelement einen Bedienbefehl für eine Bewegung der Bearbeitungseinheit initiieren kann. Durch die Zuweisung bestimmter Bedienbefehle ist es nicht erforderlich, einen Befehl aus einem Menu auszuwählen. Vielmehr genügt eine einfache Betätigung eines bestimmten Bedienelements.

Ferner kann den Bedienelementen basierend auf einem Modus der Bearbeitungsmaschine jeweils ein Bedienbefehl zugewiesen ist. Beispielsweise kann sich die Bearbeitungsmaschine in einem Ruhemodus, in dem keine Werkstückbearbeitung durchgeführt wird, oder in einem Bearbeitungsmodus, in dem eine Werkstückbearbeitung durchgeführt wird, befinden. Durch die Zuweisung eines Bedienbefehls je nach vorliegendem Modus können einem Bedienelemente mehrere Bedienbefehle zugeordnet werden, wobei der Bediener lediglich einen dieser Bedienbefehle auslösen kann, nämlich denjenigen, der bedingt durch den Betriebsmodus der Bearbeitungsmaschine gestattet wird.

Gemäß einer weiteren Variante der vorliegenden Erfindung können am Gehäuse an einer entgegengesetzten Seite zum zuvor beschriebenen Bedienelement ein oder mehrere weitere Bedienelemente angebracht sein. Dieses weitere Bedienelement bzw. die weiteren Bedienelemente können die gleiche Funktion aufweisen wie das zuvor beschriebene Bedienelement bzw. die zuvor beschriebenen Bedienelemente. Somit kann die Maschine gemäß dieser Variante beidseitig bedient werden.

Zusätzlich ist es gemäß dieser Variante möglich, auch die Betätigungselemente an der jeweils gegenüberliegenden Seite des jeweiligen Balkenträgers vorzusehen. Auch diese Ausgestaltung ermöglicht die beidseitige Bedienbarkeit der Maschine.

### Kurze Beschreibung der Zeichnungen

- Figur 1: zeigt eine Bearbeitungsmaschine gemäß einer bevorzugten Ausführungsform der vorliegenden Erfindung

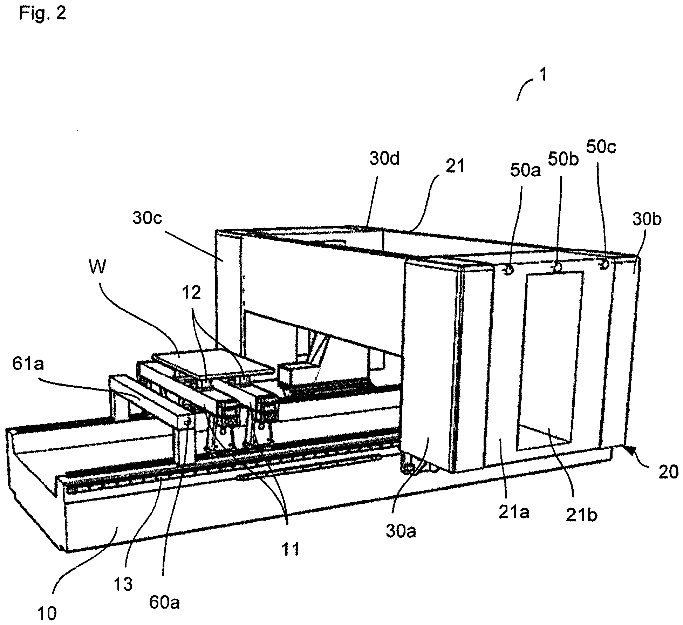

- Figur 2: zeigt eine weitere Ansicht der in Figur 1 dargestellten Bearbeitungsmaschine
- Figur 3: ist eine Draufsicht der in Figur 1 dargestellten Bearbeitungsmaschine

### Detaillierte Beschreibung der bevorzugten Ausführungsform

Nachfolgend wird anhand der beigefügten Figuren eine bevorzugte Ausführungsform der vorliegenden Erfindung im Detail beschrieben.

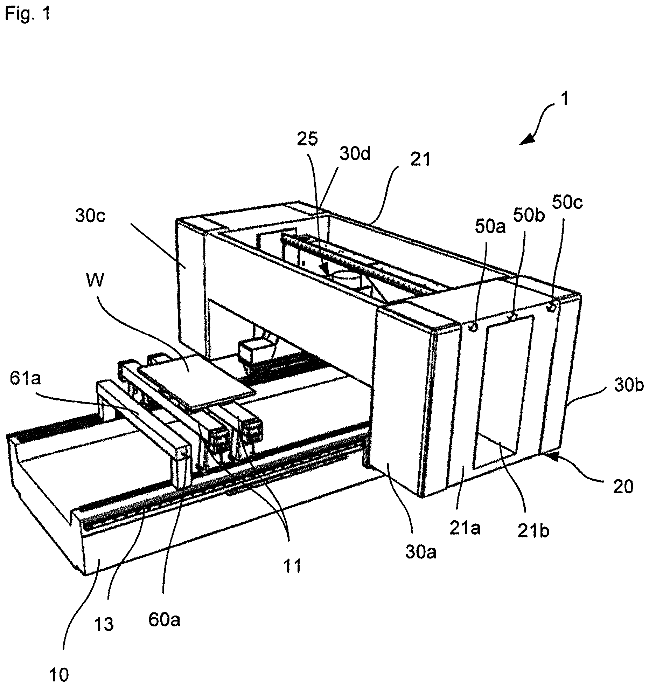

Die in Figur 1 dargestellte Bearbeitungsmaschine 1 umfasst ein Maschinenbett 10, welches auf einem Untergrund (Hallenboden) ruht. Das Maschinenbett 10 ist in der dargestellten Ausführungsform im Querschnitt u-förmig, wobei an den oberen Kanten des Maschinenbetts 10 mehrere Werkstückträger (Werkstückhalteeinrichtungen) 11 angebracht sind. Die Werkstückträger 11 können in Längsrichtung entlang des Maschinenbetts 10 verschoben werden. Ferner sind an jedem Werkstückträger 11 Spannelemente 12 (hier: Vakuumspanner) vorgesehen, mit denen ein Werkstück W gehalten werden kann.

Es ist ersichtlich, dass in einer alternativen Ausführungsform das Maschinenbett 10 auch mit einer flachen Werkstückauflagefläche, beispielsweise in Kombination mit einer Vakuummatte, ausgebildet sein kann. Ferner ist ersichtlich, dass anstelle der Vakuumspanner 12 auch Klemmeinrichtungen oder andere Haltemechanismen für Werkstücke W an einem oder mehreren Werkstückträgern 11 zum Einsatz kommen können.

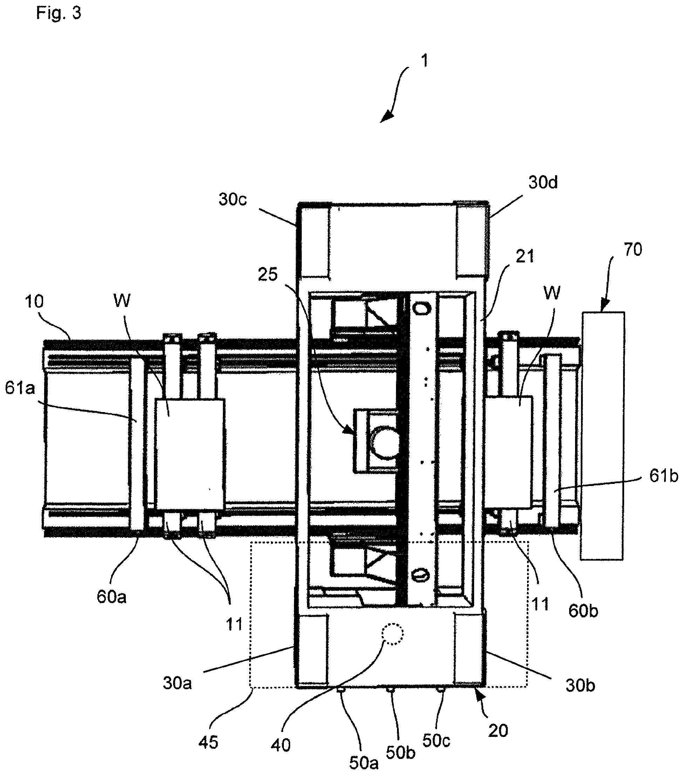

An einer Seite des Maschinenbetts (in der Draufsicht von Figur 3 an der rechten Seite) ist eine Werkzeugwechselstation 70 vorgesehen. Die lediglich schematisch dargestellte Werkzeugwechselstation 70 ist zur Aufnahme von Werkzeugen vorgesehen, die in das Bearbeitungsaggregat 25 eingewechselt werden können. Die Bearbeitungseinheit 20 kann in diesen Bereich des Maschinenbetts bewegt werden, um einen Werkzeugwechsel durchzuführen.

Die Bearbeitungsmaschine 1 ist bevorzugt zur Pendelbearbeitung vorgesehen. Somit wird in einem Abschnitt des Maschinenbetts 10 ein erster Bearbeitungsbereich definiert (in Fig. 3 im linken Bereich des Maschinenbetts 10) und in einem anderen Abschnitt des Maschinenbetts ein anderer Bearbeitungsbereich (in Fig. 3 im rechten Bereich des Maschinenbetts 10).

Um eine Verfahrbarkeit der Bearbeitungseinheit 20 sicherzustellen, erstrecken sich gemäß der vorliegenden Ausführungsform an Außenseiten des Maschinenbetts 10 Führungsschienen 13, entlang derer eine Bearbeitungseinheit 20 bewegt werden kann. Die Bearbeitungseinheit 20 umfasst ein Gehäuse 21, innerhalb dessen ein Bearbeitungsaggregat 25 angeordnet ist. Das Gehäuse 21 dient dabei der Abschirmung eines dynamischen Bearbeitungsbereichs und zum Schutz eines Bedieners. Der in diesem Zusammenhang genannte Bearbeitungsbereich wird als "dynamisch" bezeichnet, da sich dieser durch eine Bewegung der Bearbeitungseinheit 20 entlang des Maschinenbetts 10 ändert.

Das Bearbeitungsaggregat 25 kann beispielsweise ein 4-Achs, 5-Achs oder 6-Achs-Bearbeitungsaggregat sein. Insbesondere handelt es sich um ein Fräs- und/oder Bohraggregat.

An einer Vorderseite 21a des Gehäuses 21 ist ein Fenster 21b vorgesehen, sodass ein Bearbeitungsvorgang durch das Bearbeitungsaggregat 25 von einem Bediener überwacht werden kann.

Das Gehäuse 21 ragt abschnittsweise über die Außenseite des Maschinenbetts 10 hervor. In diesem Bereich des Gehäuses 21 sind an Seitenflächen des Gehäuses 21 Kontaktsensoren (sogenannte "Bumper") 30a, 30b angebracht. Die Kontaktsensoren 30a, 30b erstrecken sich dabei von einer Unterseite zu einer Oberseite des Gehäuses 21 und sind somit flächig ausgebildet.

An einem weiteren Bereich des Gehäuses 21, der dem Bereich des Gehäuses 21 gegenüberliegt, an dem die Kontaktsensoren 30a, 30b angebracht sind, sind weitere Kontaktsensoren 30c, 30d in ähnlicher Weise wie die Kontaktsensoren 30a, 30b angebracht. Auch im Bereich der weiteren Kontaktsensoren 30c, 30d steht das Gehäuse 21 über das Maschinenbett 10 hervor.

Kommt beispielsweise einer der Kontaktsensoren 30a, 30b (bzw. 30c, 30d) mit einem Bediener oder einem im Verfahrweg der Bearbeitungseinheit 20 befindlichen Gegenstand, so wird die Bearbeitungseinheit 20 angehalten.

An der Vorderseite 21a des Gehäuses 21 befinden sich in dessen oberen Bereich drei Bedienelemente, nämlich am erstes Bedienelement 50a, ein zweites Element 50b sowie ein drittes Element 50c, die in dieser Reihenfolge von links nach rechts an der Vorderseite 21a des Gehäuses 21 angebracht sind. In der vorliegenden Ausführungsform sind die Bedienelemente als Druckknöpfe ausgebildet. In anderen Ausführungsformen kann es sich auch um berührungssensitive Bedienelemente mit einer berührungssensitiven Oberfläche handeln.

Am Maschinenbett 10 sind ferner an seitlichen Positionen des Maschinenbetts 10 Balkenträger 61a, 61b mit jeweils einem Betätigungselement 60a, 60b angebracht. Die Balkenträger 61a, 61b erstrecken sich dabei in ähnlicher Weise über das Maschinenbett 10 wie die Werkstückträger 11. In der vorliegenden Ausführungsform sind die Werkstückträger 11 zwischen den beiden Balkenträgern 61a, 61b angeordnet.

An einem Endabschnitt des jeweiligen Balkenträgers 61a, 61b ist ein entsprechendes Bedienelement 60 angebracht. Die Betätigungselemente 61a, 61b sind ähnlich wie die Bedienelemente 50a-50c bevorzugt als Druckknöpfe ausgebildet, sie können jedoch auch eine andere Ausgestaltung aufweisen (bspw. berührungssensitive Betätigungselemente).

Da sich die Balkenträger 61a, 61b und somit deren Betätigungselemente 60a, 60b an seitlichen Positionen des Maschinenbetts 10 befinden, kann es sein, dass ein entsprechendes Betätigungselemente 60a, 60b durch die Positionierung der Bearbeitungseinheit 20 für den Bediener nicht zugänglich ist. In diesem Fall kann der Bediener jedoch auf die Bedienelemente 50a-50c zugreifen.

Die Bedienelemente/Betätigungselemente 50a-50c, 60a-60b lösen bei deren Betätigung bestimmte Steuerbefehle aus, die sich in der nachfolgend beschriebenen Ausführungsform zumindest teilweise auch nach dem Betriebszustand der Bearbeitungsmaschine 1 richten.

Befindet sich beispielsweise die Bearbeitungsmaschine 1 in einem "Ruhemodus", in dem das Bearbeitungsaggregat 25 keine Bearbeitungsvorgänge durchführt, so kann ein Bediener, wenn die Bearbeitungseinheit 20 in einem linken Bereich des Maschinenbetts 10 angeordnet ist, durch Betätigung des dritten Bedienelements 50c die Bearbeitungseinheit 20 in einen rechten Bereich des Maschinenbett 10 verfahren. Diese Bedienmöglichkeit ist auf Grund der Anordnung des dritten Bedienelements 50c in einem rechten Bereich der Vorderseite 21a des Gehäuses intuitiv erkennbar.

Befindet sich die Bearbeitungseinheit 20 im "Ruhemodus" im rechten Bereich des Maschinenbetts 10, so kann ein Bediener die Bearbeitungseinheit 20 in einen linken Bereich des Maschinenbetts 10 verfahren, indem das erste Bedienelement 50a betätigt wird.

Das zwischen dem ersten und dritten Bedienelement angeordnete zweite Bedienelement 50b dient in der vorliegenden Ausführungsform dazu, das Bearbeitungsaggregat 25 in vertikaler Richtung nach oben zu fahren. Somit kann der Bediener den vorab bearbeiteten Bereich an einem Werkstück besser begutachten.

Befindet sich die Bearbeitungsmaschine 1 im "Bearbeitungsmodus", bei dem ein Werkstück W durch das Bearbeitungsaggregat 25 bearbeitet wird, kann durch Betätigung eines der Bedienelemente 50a-50c ein anderer Steuerbefehle bewirkt werden. Insbesondere ist es möglich, durch Betätigung des ersten oder dritten Bedienelements 50a, 50c eine temporäre Unterbrechung des Bearbeitungsvorgangs auszulösen (Pause). Eine derartige temporäre Unterbrechung des Bearbeitungsvorgangs führt jedoch nicht zum Programmabbruch. Soll die Bearbeitung fortgesetzt werden, so kann die Bearbeitung durch nochmalige Betätigung eines der Bedienelemente 50a, 50c fortgesetzt werden.

Am Maschinenbett 10 sind ferner die an seitlichen Positionen des Maschinenbetts 10 angeordneten Balkenträger 61a, 61b mit jeweils einem Betätigungselement 60a, 60b vorgesehen. Den Betätigungselementen 60a, 60b sind ähnliche Funktionen zugewiesen wie dem ersten und dritten Bedienelemente 50a, 50c. Somit kann ein Bediener gegebenenfalls auch einen dieser Betätigungselemente 60a, 60b betätigen, um einen der bereits beschriebenen Steuerbefehle auszulösen, sofern die Betätigungselemente 60a, 60b zugänglich sind. Auf diese Weise kann in bestimmten Situationen der Bedienkomfort erhöht werden.

In Figur 3 ist ein weiterer Sensor 40 schematisch dargestellt, der als berührungsloser Sensor ausgebildet ist. Im vorliegenden Fall handelt es sich um einen Lasersensor.

Der berührungslose Sensor 40 ist an einer unteren Seite des Gehäuses 21 angebracht und kann einen Überwachungsbereich 45 überwachen. Wenn beispielsweise ein Bediener B, wie in Figur 3 dargestellt, in einem Bereich ein Werkstück W auf Werkstückträger 11 auflegt, während in einem anderen Bereich mittels der Bearbeitungseinheit 20 eine Bearbeitung an einem anderen Werkstück W durchgeführt wird, so kann der berührungslose Sensor 40 feststellen, ob die Bearbeitungseinheit 20 dem Bediener zu nahe kommt. Dies könnte der Fall sein, wenn die Bearbeitungseinheit 20 in Richtung der Werkzeugwechselstation 70 bewegt werden soll, um einen Werkzeugwechsel durchzuführen. Erkennt der berührungslose Sensor 20 hierbei den Bediener B, so wird die Bewegung der Bearbeitungseinheit 20 angehalten. Durch eine Betätigung eines der Bedienelemente, insbesondere des dritten Bedienelements 50c, kann der Vorgang durch den Bediener wieder fortgesetzt werden.

Der berührungslose Sensor 40 kann auch zusammen mit den Kontaktsensoren 30a, 30b ein 2-stufiges Sicherheitskonzept ausbilden. Tritt beispielsweise ein Bediener in der Überwachungsbereich 45 ein, so verlangsamt sich die Bewegung der Bearbeitungseinheit 20. Kommt einer der Kontaktsensoren mit dem Bediener in Kontakt, so wird der Bearbeitungsvorgang und die Bewegung der Bearbeitungseinheit 20 vollständig angehalten. Zur Fortsetzung des Bearbeitungsvorgangs kann der Bediener eines der Bedienelemente/ Betätigungselemente 50a, 50c, 60a, 60b betätigen.

Auch wenn in der zuvor beschriebenen Ausführungsform an zwei gegenüberliegenden Seiten des Gehäuses 21 Kontaktsensoren 30a-30d angebracht sind, ist es gemäß einer Modifikation der beschriebenen Ausführungsform möglich, lediglich die Kontaktsensoren 30a, 30b, oder alternativ die Kontaktsensoren 30c, 30d, vorzusehen.

Gemäß einer weiteren Variante der vorliegenden Erfindung können am Gehäuse 21 in demjenigen Bereich, in dem die Kontaktsensoren 30a, 30b bereitgestellt sind, wie zuvor beschrieben die Bedienelemente 50a-50c angebracht sein und zusätzlich an der gegenüberliegenden Seite des Gehäuses 21 (im Bereich der Kontaktsensoren 30c, 30d) weitere, hier nicht dargestellte, Bedienelemente angebracht sein. Diese weiteren Bedienelemente können ähnlich ausgebildet sein und/oder die gleiche Funktion aufweisen wie die Bedienelemente 50a-50c. Somit kann die Maschine gemäß dieser Variante beidseitig bedient werden. Mit anderen Worten kann ein Bediener von zwei Seiten an die Maschine herantreten.

Zusätzlich ist es gemäß dieser Variante möglich, auch die Betätigungselemente 60a, 60b an der jeweils gegenüberliegenden Seite des jeweiligen Balkenträgers 61a, 61b vorzusehen. Auch diese Ausgestaltung ermöglicht die beidseitige Bedienbarkeit der Maschine.

## Patentansprüche

1. Bearbeitungsmaschine (1) zum Bearbeiten von Werkstücken (W), insbesondere im Pendelbetrieb, mit:
einem Maschinenbett (10) und einer entlang des Maschinenbetts (10) bewegbaren Bearbeitungseinheit (20), in deren Gehäuse (21) ein Bearbeitungsaggregat (25) vorgesehen ist,
zumindest einem am Gehäuse (21) der Bearbeitungseinheit angebrachten Sensor (30a, 30b, 30c, 30d; 40), der zur Überwachung einer Verfahrbewegung der Bearbeitungseinheit (20) vorgesehen ist,
**dadurch gekennzeichnet, dass** am Gehäuse (21) der bewegbaren Bearbeitungseinheit Bedienelemente (50a, 50b, 50c) vorgesehen sind, um einen Bedienbefehl, insbesondere einen Start- oder Stoppbefehl, für die Bearbeitungseinheit (20) einzugeben, wobei jedem Bedienelement ein anderer Bedienbefehl zugewiesen ist.

2. Bearbeitungsmaschine (1) gemäß Anspruch 1, **dadurch gekennzeichnet, dass** am Maschinenbett (10) ein Träger (61a, 61b), insbesondere ein Balkenträger (61a, 61b) vorgesehen ist, an dem ein Betätigungselement (60a, 60b) angebracht ist, um einen Bedienbefehl für die Bearbeitungseinheit einzugeben.

3. Bearbeitungsmaschine (1) gemäß Anspruch 1, **dadurch gekennzeichnet, dass** am Maschinenbett (10) zwei Träger (61a, 61b) mit jeweils einem Betätigungselement (60a, 60b) angebracht sind, zwischen welchen Trägern (61a, 61b) ein oder mehrere Werkstückhalteeinrichtungen (11) vorgesehen sind.

4. Bearbeitungsmaschine (1) gemäß einem der vorangegangenen Ansprüche, **dadurch gekennzeichnet, dass** die Bedienelemente (50a, 50b, 50c) Bedienknöpfe oder berührungssensitiven Elemente sind.

5. Bearbeitungsmaschine (1) gemäß einem der vorangegangenen Ansprüche, **dadurch gekennzeichnet, dass** der Sensor (30a, 30b, 30c, 30d) ein Kontaktsensor, insbesondere ein Bumper, ist, der an einer Querseite des Gehäuses (21) der Bearbeitungseinheit (20) vorgesehen ist.

6. Bearbeitungsmaschine (1) gemäß einem der vorangegangenen Ansprüche, **dadurch gekennzeichnet, dass** an der Bearbeitungseinheit (20), insbesondere an einem unteren Abschnitt hiervon, ein weiterer kontaktlos arbeitender Sensor (40) angebracht ist, insbesondere ein kapazitiver Sensor, ein Lasersensor, ein Infrarotsensor, ein Ultraschallsensor, ein Lasertriangulationssensor oder ein Radarsensor.

7. Bearbeitungsmaschine (1) gemäß einem der vorangegangenen Ansprüche, **dadurch gekennzeichnet, dass** die Bearbeitungsmaschine eine Steuereinrichtung aufweist, die eingerichtet ist, basierend auf einem Bedienbefehl eine Bewegung der Bearbeitungseinheit (20) temporär anzuhalten, und bei nochmaliger Bedienung des Bedienelements die Bewegung der Bearbeitungseinheit (20) fortzusetzen.

8. Bearbeitungsmaschine (1) gemäß einem der vorangegangenen Ansprüche, **dadurch gekennzeichnet, dass** die Bearbeitungsmaschine eine Steuereinrichtung aufweist, die eingerichtet ist, eine Bewegung der Bearbeitungseinheit (20) basierend auf einem Erfassungssignal des Sensors (30a, 30b, 30c, 30d; 40) und/oder des weiteren kontaktlos arbeitenden Sensors (40) anzuhalten, und eine Bewegung der Bearbeitungseinheit (20) basierend auf einem Bedienbefehl des (50a, 50b, 50c), oder ggf. des Betätigungselements (60a, 60b) zu starten.

9. Bearbeitungsmaschine (1) gemäß einem der vorangegangenen Ansprüche, **dadurch gekennzeichnet, dass** die Bedienelemente (50a, 50b, 50c) an einer vom Maschinenbett (10) weg weisenden Seite des Gehäuses (21) angebracht sind.

10. Bearbeitungsmaschine (1) gemäß Anspruch 4, **dadurch gekennzeichnet, dass** die Bedienelemente (50a, 50b, 50c) an einem oberen Abschnitt des Gehäuses (21) vorgesehen sind.

11. Bearbeitungsmaschine (1) gemäß einem der Ansprüche 4 oder 10, **dadurch gekennzeichnet, dass** eines der Bedienelemente (50b) einen Bedienbefehl für das Bearbeitungsaggregat (25) und ein anderes Bedienelement (50a, 50c) einen Bedienbefehl für eine Bewegung der Bearbeitungseinheit (20) initiieren kann.

12. Bearbeitungsmaschine (1) gemäß einem der vorangegangenen Ansprüche, **dadurch gekennzeichnet, dass** den mehreren Bedienelementen (50a, 50b, 50c) basierend auf einem Betriebsmodus der Bearbeitungsmaschine (1) jeweils ein Bedienbefehl zugewiesen ist.

13. Verwendung einer Bearbeitungsmaschine (1) gemäß einem der vorangegangenen Ansprüche zur Bearbeitung eines Werkstücks (W), wobei die Bearbeitungsmaschine (1) insbesondere im Pendelbetrieb arbeitet.

## Claims

1. Processing machine (1) for processing workpieces (W), in particular in shuttle operation, with:
a machine bed (10) and a processing unit (20), moveable along the machine bed (10), in the housing (21) of which a processing assembly (25) is provided,
at least one sensor (30a, 30b, 30c, 30d; 40) mounted on the housing (21) of the processing unit which is provided in order to monitor a traversing movement of the processing unit (20),
**characterised in that** operating elements (50a, 50b, 50c) are provided on the housing (21) of the moveable processing unit in order to enter an operating command, in particular a start or stop command, for the processing unit (20), wherein each operating element is assigned a different operating command.

2. Processing machine (1) according to claim 1, **characterised in that** a support (61a, 61b), in particular a beam support (61a, 61b), is provided on the machine bed (10), on which an actuating element (60a, 60b) is mounted in order to enter an operating command for the processing unit.

3. Processing machine (1) according to claim 1, **characterised in that** two supports (61a, 61b), in each case with an actuating element (60a, 60b), are mounted on the machine bed (10), one or more workpiece holding devices (11) being provided between said supports (61a, 61b).

4. Processing machine (1) according to one of the preceding claims, **characterised in that** the operating elements (50a, 50b, 50c) are operating buttons or touch-sensitive elements.

5. Processing machine (1) according to one of the preceding claims, **characterised in that** the sensor (30a, 30b, 30c, 30d) is a contact sensor, in particular a bumper, which is provided on a transverse side of the housing (21) of the processing unit (20).

6. Processing machine (1) according to one of the preceding claims, **characterised in that** a further contactless sensor (40), in particular a capacitive sensor, a laser sensor, an infrared sensor, an ultrasonic sensor, a laser triangulation sensor or a radar sensor, is mounted on the processing unit (20), in particular on a lower section thereof.

7. Processing machine (1) according to one of the preceding claims, **characterised in that** the processing machine has a control device which is configured to stop a movement of the processing unit (20) temporarily based on an operating command, and to continue the movement of the processing unit (20) on further operation of the operating element.

8. Processing machine (1) according to one of the preceding claims, **characterised in that** the processing machine has a control device which is configured to stop a movement of the processing unit (20) based on a detection signal of the sensor (30a, 30b, 30c, 30d; 40) and/or of the further contactless sensor (40), and to start a movement of the processing unit (20) based on an operating command of the *[word missing in source text* - *operating elements?*] (50a, 50b, 50c), or optionally of the actuating element (60a, 60b).

9. Processing machine (1) according to one of the preceding claims, **characterised in that** the operating elements (50a, 50b, 50c) are mounted on a side of the housing (21) facing away from the machine bed (10).

10. Processing machine (1) according to claim 4, **characterised in that** the operating elements (50a, 50b, 50c) are provided on an upper section of the housing (21).

11. Processing machine (1) according to one of the claims 4 or 10, **characterised in that** one of the operating elements (50b) can initiate an operating command for the processing assembly (25) and another operating element (50a, 50c) can initiate an operating command for a movement of the processing unit (20).

12. Processing machine (1) according to one of the preceding claims, **characterised in that** the plurality of operating elements (50a, 50b, 50c) are in each case assigned an operating command based on an operating mode of the processing machine (1).

13. Use of a processing machine (1) according to one of the preceding claims to process a workpiece (W), wherein the processing machine (1) functions in particular in shuttle operation.

## Revendications

1. Machine d'usinage (1) pour un usinage de pièces à usiner (W), en particulier en mode pendulaire, avec :
un banc de machine (10) et une unité d'usinage (20), mobile le long du banc de machine (10), dans le boîtier (21) de laquelle est prévu un groupe d'usinage (25),
au moins un capteur (30a, 30b, 30c, 30d ; 40) monté sur le boîtier (21) de l'unité d'usinage, lequel capteur est prévu pour surveiller un mouvement de déplacement de l'unité d'usinage (20),
**caractérisée en ce que** des éléments de commande (50a, 50b, 50c) sont prévus sur le boîtier (21) de l'unité d'usinage mobile, pour entrer une instruction de commande, en particulier une instruction de démarrage ou d'arrêt, pour l'unité d'usinage (20), dans laquelle une instruction de commande différente est associée à chaque élément de commande.

2. Machine d'usinage (1) selon la revendication 1, **caractérisée en ce qu'**un support (61a, 61b), en particulier un support de poutre (61a, 61b), est prévu sur le banc de machine (10), sur lequel est monté un élément d'actionnement (60a, 60b) pour entrer une instruction de commande pour l'unité d'usinage.

3. Machine d'usinage (1) selon la revendication 1, **caractérisée en ce que** deux supports (61a, 61b) munis chacun d'un élément d'actionnement (60a, 60b) sont montés sur le banc de machine (10), supports (61a, 61b) entre lesquels sont prévus un ou plusieurs dispositifs de maintien de pièce à usiner (11).

4. Machine d'usinage (1) selon l'une des revendications précédentes, **caractérisée en ce que** les éléments de commande (50a, 50b, 50c) sont des boutons de commande ou des éléments tactiles.

5. Machine d'usinage (1) selon l'une quelconque des revendications précédentes, **caractérisée en ce que** le capteur (30a, 30b, 30c, 30d) est un capteur de contact, en particulier un pare-chocs, qui est prévu sur un côté transversal du boîtier (21) de l'unité d'usinage (20).

6. Machine d'usinage (1) selon l'une quelconque des revendications précédentes, **caractérisée en ce qu'**un autre capteur (40) fonctionnant sans contact, en particulier un capteur capacitif, un capteur laser, un capteur infrarouge, un capteur à ultrasons, un capteur à triangulation laser ou un capteur radar, est monté sur l'unité d'usinage (20), en particulier sur une partie inférieure de celle-ci.

7. Machine d'usinage (1) selon l'une quelconque des revendications précédentes, **caractérisée en ce que** la machine d'usinage présente un dispositif de commande qui est conçu pour arrêter temporairement un déplacement de l'unité d'usinage (20) sur la base d'une instruction de commande, et pour poursuivre le déplacement de l'unité d'usinage (20) lorsque l'élément de commande est à nouveau mis en fonctionnement.

8. Machine d'usinage (1) selon l'une quelconque des revendications précédentes, **caractérisée en ce que** la machine d'usinage présente un dispositif de commande qui est configuré pour arrêter un déplacement de l'unité d'usinage (20) sur la base d'un signal de détection du capteur (30a, 30b, 30c, 30d ; 40) et/ou de l'autre capteur (40) fonctionnant sans contact et pour démarrer un déplacement de l'unité d'usinage (20) sur la base d'une instruction de commande (50a, 50b, 50c) ou, le cas échéant, de l'élément d'actionnement (60a, 60b).

9. Machine d'usinage (1) selon l'une des revendications précédentes, **caractérisée en ce que** les éléments de commande (50a, 50b, 50c) sont montés sur un côté du boîtier (21) opposé au banc de machine (10).

10. Machine d'usinage (1) selon la revendication 4, **caractérisée en ce que** les éléments de commande (50a, 50b, 50c) sont prévus sur une section supérieure du boîtier (21).

11. Machine d'usinage (1) selon l'une des revendications 4 ou 10, **caractérisée en ce que** l'un des éléments de commande (50b) peut déclencher une instruction de commande pour le groupe d'usinage (25) et un autre élément de commande (50a, 50c) peut déclencher une instruction de commande pour un déplacement de l'unité d'usinage (20).

12. Machine d'usinage (1) selon l'une quelconque des revendications précédentes, **caractérisée en ce qu'**une instruction de commande est associée à la pluralité d'éléments de commande (50a, 50b, 50c) sur la base d'un mode d'exploitation de la machine d'usinage (1).

13. Utilisation d'une machine d'usinage (1) selon l'une quelconque des revendications précédentes à des fins d'usinage d'une pièce à usiner (W), la machine d'usinage (1) fonctionnant en particulier en mode pendulaire.
